# EUROPEAN PATENT SPECIFICATION

(11) **EP 1 381 790 B1**
(45) Date of publication and mention of the grant of the patent: **10.05.2006**
(21) Application number: 02708505.9
(22) Date of filing: 27.03.2002
(51) Int. Cl.: F16D 65/21

(54) **BRAKE ACTUATOR APPARATUS AND METHOD FOR ACTUATING A BRAKE**
BREMSBETÄTIGUNGSVORRICHTUNG UND VERFAHREN ZUM BETÄTIGEN EINER BREMSE
DISPOSITIF ET PROCEDE POUR LA COMMANDE DE FREIN

(30) Priority: 27.04.2001 GB 0110438
(43) Date of publication of application: 21.01.2004
(73) Proprietor: Meritor Heavy Vehicle Braking Systems (UK) Limited, Cwmbran, Gwent NP44 3XU (GB)
(72) Inventor: CONTI, Roberto, I-21057 Olgate Olona (IT); MCCANN, Denis, John, Llangynior Powys NP8 1NE (GB); THOMAS, Paul, Anthony, Caldicot Newport NP26 3AY (GB); HOLL, Franz, Helmut, 56869 Mastershausen (DE); GIERING, Wilfried, 56743 Mendig (DE); NECKNIG, Markus, 56323 Waldesch (DE); KNOOP, Dietmar, 82067 Ebenhausen (DE); WARD, Andrew, John, Cottesbrook ,Northampton,NN6 8PH (GB)
(74) Representative: Jones, John Bryn
(86) International application number: PCT/GB2002/001463
(87) International publication number: WO 2002/088561

(56) References cited:
- DE-A- 19 508 253
- US-A- 4 602 702
- US-A- 5 090 518

## Description

The present invention relates to a brake actuator apparatus and method for actuating a brake.

A known vehicle braking system comprises a disc fixed for rotation with a wheel and a brake clamping mechanism comprising a tappet which is mechanically actuated to bring brake pads into contact with the disc and to apply a force between the pads and the disc to provide fictional braking.

Piezo-electric devices, which expand when energised by an electric voltage, are known for applying a mechanical actuating force over a short distance.

US 5090518 shows a brake actuating apparatus using such piezo-electric devices.

According to the present invention there is provided a brake actuating apparatus as defined in claim 1.

Preferably the piezo-electric device is fixed for movement with the abutment member. Alternatively, the piezo-electric device may be fixed for movement with the force transmission element.

Preferably, the apparatus further comprises a body member, and the abutment member has a threaded portion in threaded engagement with the body member so as to be moveable by relative rotation between the abutment member and the body member.

Preferably, the support member has a threaded portion in threaded engagement with a further body member of the apparatus, so as to be axially moveable by relative rotation between the support member and the further body member.

Conveniently, the abutment member and support member are rotatable by respective rotation means. Alternatively, the body member and further body member are rotatable by respective rotation means.

Preferably, the rotation means are electric motors.

Preferably, for releasing the brake, the support member is arranged to support the force transmission element for movement of the abutment member, with the piezo-electric device contracted, to a position wherein expansion of the piezo-electric device causes the abutment member to abut the force transmission element, whereby the support member is moveable to a position wherein contraction of the piezo-electric device allows the force transmission element to move into abutment with the support member.

According to a further aspect of the present invention, there is provided a method for actuating a brake as defined in claim 10 and 12.

It is an advantage of the apparatus and method herein described that although the distance that the piezo-electric device moves is small, by repeatedly expanding and contracting the device, and moving the abutment member and support member to abut the force transmission element the piezo-electric device may be used to provide a substantially larger movement to the force transmission element.

Furthermore, because a braking mechanism has a degree of elasticity in its structure, a degree of elastic deformation has to be taken up by the structure before the force applied by the actuating means is transmitted to the brake pads. With the present invention a piezo-electric device may be used to move the force transmission element beyond the elastic deformation of the structure and to apply the braking force.

A further advantage is that the same apparatus may also be used to release the brake.

An embodiment of the invention will now be described by way of example, with reference to the accompanying drawings in which:
Figures 1a to 1e show the stages in the operation of a brake acuator to apply an actuating force;
Figures 2a to 2d show the stages in the operation of the actuator of Figures 1a to 1e for releasing the brake.

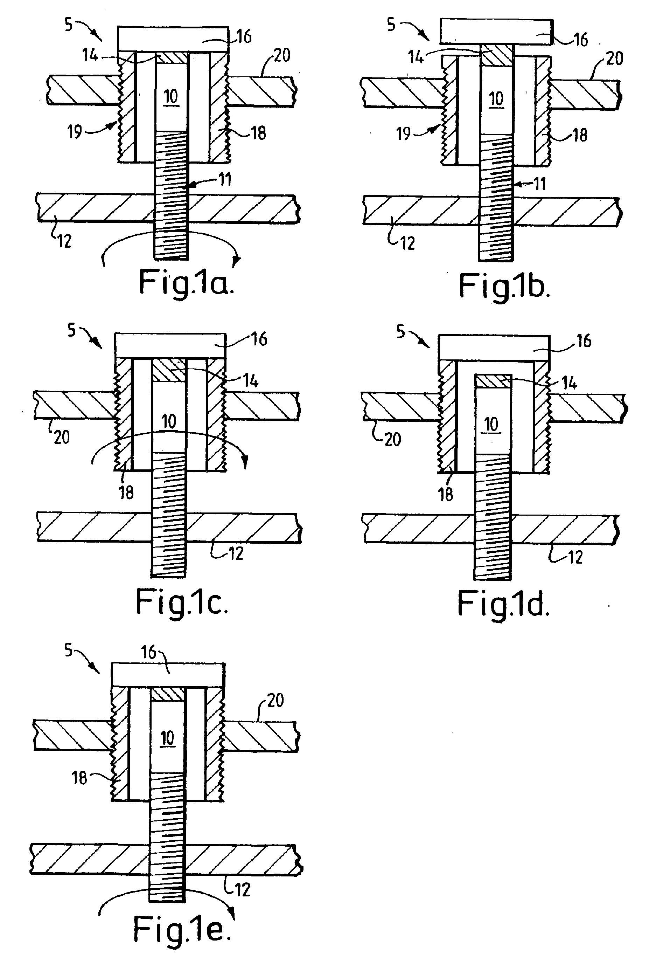

Referring to Figure 1a, an actuating apparatus 5 for actuating a brake comprises an abutment member in the form of a pin 10 arranged on an axis of the actuator 5. The pin 10 has a threaded portion 11 in threaded engagement with an associated first body member 12 of a vehicle brake mechanism. The first body member 12 is axially fixed with respect to the brake mechanism. A piezo-electric device 14, comprising at least one piezo-electric element, is fixed to the pin 10 and is operable to be expanded by application of an electric voltage. The pin 10 abuts a force transmission element in the form of a tappet 16 for transmitting an applied actuating force in an axial direction. The tappet 16 forms part of a clamping mechanism for exerting a clamping force on a pair of brake pads in response to application of the brake.

Also shown in Figure 1 is a support member in the form of a sleeve 18 having a threaded portion 19 in threaded engagement with an associated second body member 20 of the brake mechanism. The second body member 20 is axially fixed with respect to the brake mechanism. The sleeve 18 is substantially coaxial with and surrounds the pin 10. The sleeve 18 abuts the tappet 16 to support it.

The threaded engagements 11, 19 of the pin 10 and sleeve 18 provide axial movement by relative rotation between the pin 10 and sleeve 18 and their respective associated body members 12, 20. Rotational motion is provided to the pin 10 or the sleeve 18 by associated electric motors (not shown). Alternatively , rotational motion may be provided to the first and second body members 12, 20.

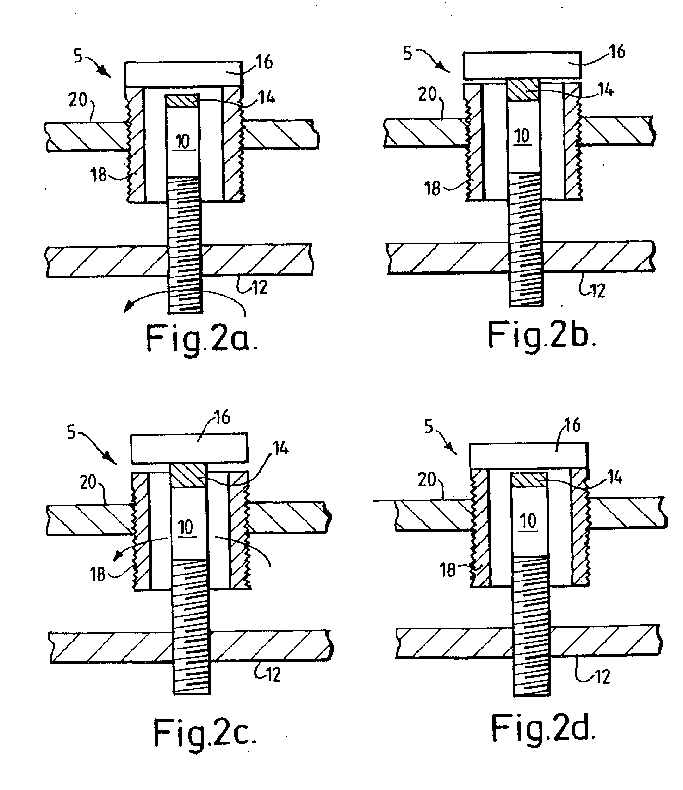

It will be appreciated that the piezo-electric device 14 does not need to directly abut the tappet 16 (as shown in Figures 1a to 1e and 2a to 2e), but may be situated at any position along the length of the pin 10 so that expansion of the piezo-electric device 14 causes the pin 10 to abut the tappet 16 and to apply a force in the axial direction. Alternatively, the piezo-electric device 14 could be attached to the tappet 16.

Referring to Figure 1b, in the first stage of actuation of the brake the piezo-electric element 14 is expanded by application of the electric voltage so as to apply a force to the tappet 16 and to move tappet 16 in the axial direction. Tappet 16 moves out of contact with the sleeve 18.

In the second stage, shown in Figure 1c, the sleeve 18 is rotated so as to move axially to abut the tappet 16.

In the third stage, shown in Figure 1d, the piezo-electric element 14 is contracted by removal of the electric voltage, moving the pin 10 out of contact with the tappet 16.

In the fourth stage, shown in Figure 1e, the pin 10 is rotated so as to move axially to abut the tappet 16. The actuator 5 is now in the same configuration as in Figure 1a, although the tappet 16, pin 10, and sleeve 18 have been moved in the axial direction.

The stages shown in Figures 1 a to 1e are then repeated as many times as required to take up the elastic deformation of the brake mechanism and to apply the required braking force to the brake.

Thus, although only a small movement of the tappet 16 can be effected by a single expansion of the piezo-electric device 14, the brake can be actuated by repeated expansion and contraction of the piezo-electric device 14.

Referring to Figure 2a, in the first stage of releasing the brake the pin 10 is rotated so as to move a first predetermined distance axially away from the tappet 16.

The first predetermined distance is set such that in the second stage, shown in Figure 2b, the piezo-electric device 14 is expanded so as to abut the tappet 16 and move it just clear of the sleeve 18.

In the third stage, shown in Figure 2c, the sleeve 18 is rotated so as to move a second predetermined distance axially away from the tappet 16.

The second predetermined distance is set such that in the fourth stage, shown in Figure 2d, the sleeve 18 is in a position whereby, when the piezo-electric element 14 is contracted, the tappet 16 moves axially to just abut the sleeve 18 before the piezo-electric element 14 has fully contracted.

The stages shown in Figures 2a to 2d are repeated to further release the brake.

## Claims

1. A brake actuating apparatus (5) comprising a single piezo-electric device (14), a force transmission element (16), positioned at a first position, operable to transmit a brake actuating force, an abutment member (10), moveable to cause the piezo-electric device (14) to selectively abut and disengage one of the force transmission element (16) and the abutment member (10) the piezo-electric device (14) being operable on expansion to apply a force between the abutment member (10) and the force transmission element (16) to move the force transmission element (16) in a direction of brake actuation, and a support member (18) moveable independently of the abutment member (10) to support the force transmission element (16) in a new position following movement of the force transmission element (16) from the first position by expansion of the piezo-electric device (14) thereby allowing the abutment member (10) to move the piezo-electric device (14) so that said piezo electric device (14) is expandable to apply a force between the abutment member (10) and the force transmission element (16) to move the force transmission element (16) from said new position in a direction of brake actuation.

2. A brake actuating apparatus (5) according to claim 1 in which the piezo-electric device (14) is fixed for movement with the abutment member (10).

3. A brake actuating apparatus (5) according to claim 1 in which the piezo-electric device (14) is fixed for movement with the force transmission element (16).

4. A brake actuating apparatus (5) according to any preceding claim in which the apparatus comprises a first body member (12), the abutment member (10) having a threaded portion (11) in threaded engagement with the first body member (12) so as to be moveable by relative rotation between the abutment member (10) and the first body member (12).

5. A brake actuating apparatus (5) according to any preceding claim in which the support member (18) has a threaded portion (19) in threaded engagement with a second body member (20), so as to be axially moveable by relative rotation between the support member (18) and the second body member (20).

6. A brake actuating apparatus (5) according to any preceding claim in which the abutment member (10) and/or support member (18) are rotatable by respective rotation means.

7. A brake actuating apparatus (5) according to claims 1 to 5 in which the first body member (12) and/or second body member (20) are rotatable by respective rotation means.

8. A brake actuating apparatus (5) according to claims 6 or 7 in which the rotation means are electric motors.

9. A brake actuating apparatus (5) according to claim 1 or 2 or any one of claims 4 to 8 when dependent on claim 2 in which the support member (18) is arranged to support the force transmission element (16) for movement of the abutment member (10), with the piezo-electric device (14) contracted, to a position wherein expansion of the piezoelectric device (14) causes the piezo electric device (14) to abut the force transmission element, whereby the support member (18) is moveable to a position wherein contraction of the piezo-electric device (14) allows the force transmission elemen (16) to move into abutment with the support member (18).

10. A method for actuating a brake comprising the steps of:
a) providing a force transmission element (16) at a first position;
b) providing a piezo-electric device (14);
c) providing an abutment member (10), the piezo-electric device (14) being fixed to the abutment member (10), the abutment member (10) being moveable to cause the piezo electric device (14) to selectively abut against and disengage from the force transmission element (16),
d) moving the abutment member (10) so as to abut the piezo-electric device (14) against the force transmission element (16).
e) expanding said piezo-electric device (14) to apply a force between the abutment member (10) and the force transmission element (16) to move the force transmission element (16) in a direction of brake actuation to a second position;
f) moving a support member (18) into abutment with the force transmission element (16) to support the force transmission element (16) in said second position;
g) contracting said piezo-electric device (14),
h) repeating step d;
i) expanding said piezo-electric device (14) to apply a force between the abutment member (10) and the force transmission element (16) to move the force transmission element (16) in a direction of brake actuation from said second position to a third position;
j) moving the support member (18) into abutment with the force transmission element (16) to support force transmission element (16) stationary in said third position;
k) repeating step g
l) repeating steps corresponding to steps h, i, j and k for as many times as required to actuate the brake.

11. A method for actuating a brake comprising steps of:
m) carrying out steps a) to 1) the method of claim 10;
n) repeating a step corresponding to step h) of claim 10;
o) moving the abutment member (10) so that the piezo-electric device (14) moves out of abutment with the force transmission element (16);
p) expanding the piezo-electric device (14) to cause the abutment member (10) to abut the force transmission element (16);
q) moving the support member (18) away from the force transmission element (16);
r) contracting the piezo-electric device (14) to cause the support member (18) to support the force transmission element (16); and
s) repeating steps o to r for as many times as required to release the brake.

12. A method for actuating a brake comprising the steps of:
a) providing a force transmission element (16) at a first position;
b) providing a piezo-electric device (14) fixed to the force transmission element (16);
c) providing an abutment member (10) that is moveable to selectively abut against and disengage from the piezo electric device (14);
d) moving the abutment member (10) into abutment with the piezo-electric device (14).
e) expanding said piezo-electric device (14) to apply a force between the abutment member (10) and the force transmission element (16) to move the force transmission element (16) in a direction of brake actuation to a second position;
f) moving a support member (18) into abutment with the force transmission element (16) to support the force transmission element (16) in said second position;
g) contracting said piezo-electric device (14);
h) repeating step d;
i) expanding said piezo-electric device (14) to apply a force between the abutment member (10) and the force transmission elemen (16) to move the force transmission element (16) in a direction of brake actuation from said second position to a third position;
j) moving the support member (10) into abutment with the force transmission element (16) to support force transmission element (16) stationary in said third position;
k) repeating step g
l) repeating steps corresponding to steps h, i, j and k for as many times as required to actuate the brake.

13. A method for actuating a brake comprising steps of:
m) carrying out steps a) to 1) of the method of claim 12;
n) repeating a step corresponding to step h) of claim 12;
o) moving the abutment member (10) out of abutment with the piezo-electric device (14);
p) expanding the piezo-electric device (14) to cause the piezo electric device (14) to abut the abutment member (10);
q) moving the support member (18) away from the force transmission element (16);
r) contracting the piezo-electric device (14) to cause the support member (18) to support the force transmission element (16); and
s) repeating steps o to r for as many times as required to release the brake.

## Patentansprüche

1. Bremsenbetätigungsvorrichtung (5) mit einer einzigen piezoelektrischen Vorrichtung (14), einem in einer ersten Stellung positionierten Kraftübertragungselement (16), das betätigt werden kann, um eine Bremsenbetätigungskraft zu übertragen, einem Anschlagteil (10), das bewegt werden kann, damit die piezoelektrische Vorrichtung (14) wahlweise an dem Kraftübertragungselement (16) oder an dem Anschlagteil (10) anschlägt und sich davon löst, wobei die piezoelektrische Vorrichtung (14) beim Ausdehnen betätigt werden kann, um eine Kraft zwischen dem Anschlagteil (10) und dem Kraftübertragungselement (16) aufzubringen, um das Kraftübertragungselement (16) in Richtung einer Bremsenbetätigung zu bewegen, und mit einem Halteteil (18), das unabhängig von dem Anschlagteil (10) bewegt werden kann, um das Kraftübertragungselement (16) in einer neuen Stellung zu halten, nachdem das Kraftübertragungselement (16) durch die Ausdehnung der piezoelektrischen Vorrichtung (14) aus der ersten Stellung bewegt wurde, wodurch das Anschlagteil (10) die piezoelektrische Vorrichtung (14) bewegen kann, so dass die piezoelektrische Vorrichtung (14) ausgedehnt werden kann, um eine Kraft zwischen dem Anschlagteil (10) und dem Kraftübertragungselement (16) aufzubringen, um das Kraftübertragungselement (16) von der neuen Stellung in Richtung einer Bremsenbetätigung zu bewegen.

2. Bremsenbetätigungsvorrichtung (5) nach Anspruch 1, bei der die piezoelektrische Vorrichtung (14) zur Bewegung mit dem Anschlagteil (10) fixiert ist.

3. Bremsenbetätigungsvorrichtung (5) nach Anspruch 1, bei der die piezoelektrische Vorrichtung (14) zur Bewegung mit dem Kraftübertragungselement (16) fixiert ist.

4. Bremsenbetätigungsvorrichtung (5) nach einem der vorhergehenden Ansprüche, bei der die Vorrichtung ein erstes Körperteil (12) umfasst, wobei das Anschlagteil (10) einen Gewindeabschnitt (11) aufweist, der mit dem ersten Körperteil (12) in Gewindeeingriff steht, um durch die Relativdrehung zwischen dem Anschlagteil (10) und dem ersten Körperteil (12) bewegbar zu sein.

5. Bremsenbetätigungsvorrichtung (5) nach einem der vorhergehenden Ansprüche, bei der das Halteteil (18) einen Gewindeabschnitt (19) aufweist, der mit einem zweiten Körperteil (20) in Gewindeeingriff steht, um durch die Relativdrehung zwischen dem Halteteil (18) und dem zweiten Körperteil (20) axial bewegbar zu sein.

6. Bremsenbetätigungsvorrichtung (5) nach einem der vorhergehenden Ansprüche, bei der das Anschlagteil (10) und/oder das Halteteil (18) durch jeweilige Dreheinrichtungen drehbar sind.

7. Bremsenbetätigungsvorrichtung (5) nach Anspruch 1 bis 5, bei der das erste Körperteil (12) und/oder das zweite Körperteil (20) durch jeweilige Dreheinrichtungen drehbar sind.

8. Bremsenbetätigungsvorrichtung (5) nach Anspruch 6 oder 7, bei der die Dreheinrichtungen Elektromotoren sind.

9. Bremsenbetätigungsvorrichtung (5) nach Anspruch 1 oder 2 oder einem der Ansprüche 4 bis 8, wenn diese abhängig sind von Anspruch 2, bei der das Halteteil (18) dazu ausgelegt ist, das Kraftübertragungselement (16) zu halten, um das Anschlagteil (10) bei zusammengezogener piezoelektrischer Vorrichtung (14) in eine Stellung zu bewegen, in der die piezoelektrische Vorrichtung (14) aufgrund der Ausdehnung der piezoelektrischen Vorrichtung (14) an dem Kraftübertragungselement anschlägt, wodurch das Halteteil (18) in eine Stellung bewegt werden kann, in der sich das Kraftübertragungselement (16) durch die Kontraktion der piezoelektrischen Vorrichtung (14) in Anschlag mit dem Halteteil (18) bewegen kann.

10. Verfahren zum Betätigen einer Bremse mit den folgenden Schritten:
a) Bereitstellen eines Kraftübertragungselements (16) in einer ersten Stellung;
b) Bereitstellen einer piezoelektrischen Vorrichtung (14);
c) Bereitstellen eines Anschlagteils (10), wobei die piezoelektrische Vorrichtung (14) an dem Anschlagteil (10) befestigt ist und das Anschlagteil (10) bewegbar ist, damit die piezoelektrische Vorrichtung (14) wahlweise an dem Kraftübertragungselement (16) anschlägt und sich davon löst;
d) das Anschlagteil (10) bewegen, damit die piezoelektrische Vorrichtung (14) an dem Kraftübertragungselement (16) anschlägt;
e) die piezoelektrische Vorrichtung (14) ausdehnen, um eine Kraft zwischen dem Anschlagteil (10) und dem Kraftübertragungselement (16) aufzubringen, um das Kraftübertragungselement (16) in Richtung einer Bremsenbetätigung in eine zweite Stellung zu bewegen;
f) ein Halteteil (18) mit dem Kraftübertragungselement (16) in Anschlag bringen, um das Kraftübertragungselement (16) in der zweiten Stellung zu halten;
g) die piezoelektrische Vorrichtung (14) zusammenziehen;
h) Wiederholung von Schritt d;
i) die piezoelektrische Vorrichtung (14) ausdehnen, um eine Kraft zwischen dem Anschlagteil (10) und dem Kraftübertragungselement (16) aufzubringen, um das Kraftübertragungselement (16) in Richtung einer Bremsenbetätigung von der zweiten Stellung in eine dritte Stellung zu bewegen;
j) das Halteteil (18) mit dem Kraftübertragungselement (16) in Anschlag bringen, um das Kraftübertragungselement (16) in der dritten Stellung festzuhalten;
k) Wiederholung von Schritt g;
l) Wiederholung der den Schritten h, i, j und k entsprechenden Schritte, sooft dies zum Betätigen der Bremse erforderlich ist.

11. Verfahren zum Betätigen einer Bremse mit den folgenden Schritten:
m) Durchführung der Schritte a) bis 1) des Verfahrens von Anspruch 10;
n) Wiederholung eines Schritt h) von Anspruch 10 entsprechenden Schrittes;
o) das Anschlagteil (10) bewegen, damit die piezoelektrische Vorrichtung (14) aus dem Anschlag mit dem Kraftübertragungselement (16) gelöst wird;
p) die piezoelektrische Vorrichtung (14) ausdehnen, damit das Anschlagteil (10) an das Kraftübertragungselement (16) anschlägt;
q) das Halteteil (18) von dem Kraftübertragungselement (16) wegbewegen;
r) die piezoelektrische Vorrichtung (14) zusammenziehen, damit das Halteteil (18) das Kraftübertragungselement (16) hält; und
s) Wiederholung der Schritte o bis r, sooft es zum Lösen der Bremse erforderlich ist.

12. Verfahren zum Betätigen einer Bremse mit den folgenden Schritten:
a) Bereitstellen eines Kraftübertragungselements (16) in einer ersten Stellung;
b) Bereitstellen einer piezoelektrischen Vorrichtung (14), die an dem Kraftübertragungselement (16) befestigt ist;
c) Bereitstellen eines Anschlagteils (10), das bewegbar ist, um wahlweise an der piezoelektrischen Vorrichtung (14) anzuschlagen und sich von dieser zu lösen;
d) das Anschlagteil (10) mit der piezoelektrischen Vorrichtung (14) in Anschlag bringen;
e) die piezoelektrische Vorrichtung (14) ausdehnen, um eine Kraft zwischen dem Anschlagteil (10) und dem Kraftübertragungselement (16) aufzubringen, um das Kraftübertragungselement (16) in Richtung einer Bremsenbetätigung in eine zweite Stellung zu bewegen;
f) ein Halteteil (18) mit dem Kraftübertragungselement (16) in Anschlag bringen, um das Kraftübertragungselement (16) in der zweiten Stellung zu halten;
g) die piezoelektrische Vorrichtung (14) zusammenziehen;
h) Wiederholung von Schritt d;
i) die piezoelektrische Vorrichtung (14) ausdehnen, um eine Kraft zwischen dem Anschlagteil (10) und dem Kraftübertragungselement (16) aufzubringen, um das Kraftübertragungselement (16) in Richtung einer Bremsenbetätigung von der zweiten Stellung in eine dritte Stellung zu bewegen;
j) das Halteteil (18) mit dem Kraftübertragungselement (16) in Anschlag bringen, um das Kraftübertragungselement (16) in der dritten Stellung festzuhalten;
k) Wiederholung von Schritt g;
l) Wiederholung der den Schritten h, i, j und k entsprechenden Schritte, sooft es zum Betätigen der Bremse erforderlich ist.

13. Verfahren zum Betätigen einer Bremse mit den folgenden Schritten:
m) Durchführung der Schritte a) bis 1) des Verfahrens von Anspruch 12;
n) Wiederholung eines Schritt h) von Anspruch 12 entsprechenden Schrittes;
o) das Anschlagteil (10) aus dem Anschlag mit der piezoelektrischen Vorrichtung (14) lösen;
p) die piezoelektrische Vorrichtung (14) ausdehnen, damit die piezoelektrische Vorrichtung (14) an dem Anschlagteil (10) anschlägt;
q) das Halteteil (18) von dem Kraftübertragungselement (16) wegbewegen;
r) die piezoelektrische Vorrichtung (14) zusammenziehen, damit das Halteteil (18) das Kraftübertragungselement (16) hält; und
s) Wiederholung der Schritte o bis r, sooft es zum Lösen der Bremse erforderlich ist.

## Revendications

1. Organe (5) d'actionnement de frein comprenant un unique dispositif piézo-électrique (14), un élément de transmission de force (16), positionné dans une première position, susceptible d'être actionné pour transmettre une force d'actionnement du frein, un élément de butée (10), mobile pour conduire sélectivement le dispositif piézo-électrique (14) à venir buter contre et à se désengager de l'un parmi l'élément de transmission de force (16) et l'élément de butée (10), le dispositif piézo-électrique (14) étant susceptible d'être actionné pour se dilater afin d'appliquer une force entre l'élément de butée (10) et l'élément de transmission de force (16) pour déplacer l'élément de transmission de force (16) dans la direction d'actionnement du frein, et un élément de support (18) mobile indépendamment de l'élément de butée (10) pour supporter l'élément de transmission de force (16) dans une nouvelle position après le déplacement de l'élément de transmission de force (16) à partir de la première position par dilatation du dispositif piézo-électrique (14), de sorte à permettre à l'élément de butée (10) de déplacer le dispositif piézo-électrique (14) de sorte que ledit dispositif piézo-électrique (14) puisse se dilater pour appliquer une force entre l'élément de butée (10) et l'élément de transmission de force (16) pour déplacer l'élément de transmission de force (16) à partir de ladite nouvelle position dans une direction d'actionnement du frein.

2. Organe (5) d'actionnement de frein selon la revendication 1 dans lequel le dispositif piézo-électrique (14) est fixé pour se déplacer avec l'élément de butée (10).

3. Organe (5) d'actionnement de frein selon la revendication 1 dans lequel le dispositif piézo-électrique (14) est fixé pour se déplacer avec l'élément de transmission de force (16).

4. Organe (5) d'actionnement de frein selon l'une quelconque des revendications précédentes dans lequel l'organe comprend un premier élément de corps (12), l'élément de butée (10) comportant une partie filetée (11) vissée dans le premier élément de corps (12) afin d'être mobile par la rotation relative entre l'élément de butée (10) et le premier élément de corps (12).

5. Organe (5) d'actionnement de frein selon l'une quelconque des revendications précédentes dans lequel l'élément de support (18) comporte une partie filetée (19) vissée dans un deuxième élément de corps (20) de manière à être axialement mobile par une rotation relative entre l'élément de support (18) et le deuxième élément de corps (20).

6. Organe (5) d'actionnement de frein selon l'une quelconque des revendications précédentes dans lequel l'élément de butée (10) et/ou l'élément de support (18) sont susceptibles d'être entraînés en rotation par des moyens de rotation respectifs.

7. Organe (5) d'actionnement de frein selon les revendications 1 à 5 dans lequel le premier élément de corps (12) et/ou le second élément de corps (20) sont susceptibles d'être entraînés en rotation par des moyens de rotation respectifs.

8. Organe (5) d'actionnement de frein selon les revendications 6 ou 7 dans lequel les moyens de rotation sont des moteurs électriques.

9. Organe (5) d'actionnement de frein selon les revendications 1 ou 2 ou l'une quelconque des revendications 4 à 8 lorsqu'elles dépendent de la revendication 2, dans lequel l'élément de support (18) est agencé pour supporter l'élément de transmission de force (16) pour déplacer l'élément de butée (10), le dispositif piézo-électrique (14) étant contracté, jusqu'à une position dans laquelle la dilatation du dispositif piézo-électrique (14) provoque la mise en butée du dispositif piézo-électrique (14) contre l'élément de transmission de force, de sorte que l'élément de support (18) soit mobile vers une position dans laquelle la contraction du dispositif piézo-électrique (14) permet à l'élément de transmission de force (16) de venir buter contre l'élément de support (18).

10. Procédé pour actionner un frein, comprenant les étapes consistant à:
a) prévoir un élément de transmission de force (16) dans une première position;
b) prévoir un dispositif piézo-électrique (14);
c) prévoir un élément de butée (10), le dispositif piézo-électrique (14) étant fixé à l'élément de butée (10), l'élément de butée (10) étant mobile pour conduire sélectivement le dispositif piézo-électrique (14) à venir buter contre et à se désengager de l'élément de transmission de force (16);
d) déplacer l'élément de butée (10) de manière à faire buter le dispositif piézo-électrique (14) contre l'élément de transmission de force (16);
e) dilater ledit dispositif piézo-électrique (14) pour appliquer une force entre l'élément de butée (10) et l'élément de transmission de force (16) pour déplacer l'élément de transmission de force (16) dans une direction d'actionnement du frein jusqu'à une deuxième position;
f) déplacer un élément de support (18) pour le faire buter contre l'élément de transmission de force (16) pour supporter l'élément de transmission de force (16) dans ladite deuxième position;
g) contracter ledit dispositif piézo-électrique (14);
h) répéter l'étape d;
i) dilater ledit dispositif piézo-électrique (14) pour appliquer une force entre l'élément de butée (10) et l'élément de transmission de force (16) pour déplacer l'élément de transmission de force (16) dans une direction d'actionnement du frein à partir de ladite deuxième position jusqu'à une troisième position;
j) déplacer l'élément de support (18) pour le faire buter contre l'élément de transmission de force (16) pour supporter l'élément de transmission de force (16) stationnaire dans ladite troisième position;
k) répéter l'étape g;
l) répéter les étapes correspondant aux étapes h, i, j et k autant de fois que nécessaire pour actionner le frein.

11. Procédé pour actionner un frein comprenant les étapes consistant à:
m) effectuer les étapes a) à 1) du procédé de la revendication 10;
n) répéter une étape correspondant à l'étape h) de la revendication 10;
o) déplacer l'élément de butée (10) de sorte que le dispositif piézo-électrique (14) se déplace pour cesser d'être en butée avec l'élément de transmission de force (16);
p) dilater le dispositif piézo-électrique (14) pour faire déplacer l'élément de butée (10) en butée contre l'élément de transmission de force (16);
q) déplacer l'élément de support (18) à l'écart de l'élément de transmission de force (16);
r) contracter le dispositif piézo-électrique (14) pour faire supporter l'élément de support (18) par l'élément de transmission de force (16); et
s) répéter les étapes o à r autant de fois que nécessaire pour libérer le frein.

12. Procédé pour actionner un frein comprenant les étapes consistant à:
a) prévoir un élément de transmission de force (16) dans une première position;
b) prévoir un dispositif piézo-électrique (14) fixé à l'élément de transmission de force (16);
c) prévoir un élément de butée (10) qui est mobile pour sélectivement buter contre et se désengager du dispositif piézo-électrique (14);
d) déplacer l'élément de butée (10) pour le faire buter contre le dispositif piézo-électrique (14);
e) dilater ledit dispositif piézo-électrique (14) pour appliquer une force entre l'élément de butée (10) et l'élément de transmission de force (16) pour déplacer l'élément de transmission de force (16) dans une direction d'actionnement du frein jusqu'à une deuxième position;
f) déplacer un élément de support (18) pour le faire buter contre l'élément de transmission de force (16) pour supporter l'élément de transmission de force (16) dans ladite deuxième position;
g) contracter ledit dispositif piézo-électrique (14);
h) répéter l'étape d;
i) dilater ledit dispositif piézo-électrique (14) pour appliquer une force entre l'élément de butée (18) et l'élément de transmission de force (16) pour déplacer l'élément de transmission de force (16) dans une direction d'actionnement du frein à partir de ladite deuxième position jusqu'à une troisième position;
j) déplacer l'élément de support (10) pour le faire buter contre l'élément de transmission de force (16) pour supporter l'élément de transmission de force (16) stationnaire dans ladite troisième position;
k) répéter l'étape g;
l) répéter les étapes correspondant aux étapes h, i, j et k autant de fois que nécessaire pour actionner le frein.

13. Procédé pour actionner un frein comprenant les étapes consistant à
m) effectuer les étapes a) à 1) du procédé de la revendication 12;
n) répéter une étape correspondant à l'étape h) de la revendication 12;
o) déplacer l'élément de butée (10) de sorte qu'il cesse d'être en butée avec le dispositif piézo-électrique (14);
p) dilater le dispositif piézo-électrique (14) pour conduire le dispositif piézo-électrique (14) à buter contre l'élément de butée (10);
q) déplacer l'élément de support (18) à l'écart de l'élément de transmission de force (16);
r) contracter le dispositif piézo-électrique (14) pour conduire l'élément de support (18) à supporter l'élément de transmission de force (16); et
s) répéter les étapes o à r autant de fois que nécessaire pour libérer ou desserrer le frein.
